# EUROPEAN PATENT APPLICATION

(11) **EP 0 778 008 A2**
(43) Date of publication of application: **11.06.1997**
(21) Application number: 96109787.0
(22) Date of filing: 18.06.1996
(51) Int. Cl.: A61C 7/12

(54) **Low force square cross-section orthodontic archwires near body temperature activated**

(30) Priority: 04.12.1995 US 567135
(71) Applicant: MINNESOTA MINING AND MANUFACTURING COMPANY, St. Paul, Minnesota 55133-3427 (US)
(72) Inventor: Banerjee, Satyajit, Monrovia, California 91019 (US)
(74) Representative: VOSSIUS & PARTNER

(57) **Abstract**

Orthodontic archwires having a certain square cross-sectional configuration provide forces in use that are gentle and yet sufficient to move teeth over relatively long distances. The archwires are made of a shape memory alloy exhibiting super-elastic properties with a transition temperature in or near the body temperature range. The archwires do not cause patient discomfort during the early stages of treatment even when the teeth may be located a relatively long distance from their intended final position. Use of the archwires of the invention provides an opportunity for complete treatment with fewer changes of archwires in comparison to prior art archwires.

## Description

This invention relates to orthodontic archwires that are made of a shape memory alloy exhibiting super-elastic properties and that are especially suitable for use in the early stages of orthodontic treatment.

Orthodontic treatment involves movement of maloccluded teeth to orthodontically correct positions. In many types of treatment, tiny slotted devices known as brackets are fixed to the patient's teeth, and a resilient archwire is inserted in the slot of each bracket. The archwire serves as a track to guide movement of the brackets so that the teeth are moved to desired positions.

Many brackets commonly available have a slot with a rectangular cross-sectional configuration. The rectangular shape of the slot is adapted to mate with archwires having rectangular configurations in longitudinally transverse cross-sections. The matching, rectangular shapes serve to non-rotatably couple the archwire to the bracket. As a consequence, the archwires can be twisted slightly between adjacent teeth in order to impose a torquing or uprighting force on the teeth.

Typically, only a single set of brackets is affixed to the patient's teeth during the course of treatment. However, the archwire may be changed at selected intervals in the treatment program and replaced with another archwire having somewhat different characteristics. For example, an archwire having a relatively low stiffness may be used initially when the teeth are located some distance from their intended final position so that undue and possibly painful forces are not experienced by the patient. As the teeth move closer to their desired final positions, the archwire can be replaced with an archwire having a higher stiffness in order to facilitate moving the teeth over the remaining distances.

In some treatment programs, an archwire having a round cross-sectional configuration and a relatively low stiffness is used during the initial stage of treatment. These archwires are often used when the teeth are initially severely maloccluded, since such archwires offer little resistance to bending and thus can be ligated to each bracket without undue force even when adjacent teeth are located labial-lingually (i.e., in directions along a line extending from the lips or cheeks to the tongue) with respect to one another. Unfortunately, such round archwires are usually replaced early during the course of treatment, because round archwires can rotate in the slots of the brackets and therefore do not allow the orthodontist to exert a torquing or uprighting force as may be needed on selected teeth by placing bends or twists in the archwires.

Conventional brackets with rectangular slots are offered with slot sizes of nominal 0.018 inch (0.46 mm) and 0.022 inch (0.56 mm) when measured in an occlusal-gingival direction (i.e., in a direction from the apex of the tooth toward the gums or gingiva). A bracket having a nominal 0.018 inch (0.46 mm) slot, for example, may have a slot that in actuality measures 0.0182 inch to 0.0192 inch (0.462 mm to 0.488 mm). The practitioner using a bracket having a nominal 0.018 inch (0.46 mm) slot is thus limited to an archwire that is less than the dimensions of the slot. A typical factory specification for a nominal 0.018 inch (0.46 mm) rectangular archwire is an archwire that has occlusal and gingival sidewalls spaced apart a distance in the range of 0.0174 inch to 0.0180 inch (0.442 mm to 0.457 mm) so that the archwire can easily slide into the slot without interference.

Good three-dimensional control of tooth movement is important in orthodontic treatment in order to move and orient the teeth in respective desired positions. Precise three-dimensional control of tooth movement may be achieved by using an archwire that substantially fills the slot of the brackets such that relatively little "slop" or play exists between the occlusal and gingival sidewalls of the archwire and the occlusal and gingival wall sections of the archwire slot. Unfortunately, if the teeth are severely maloccluded, a reduction in play between the occlusal and gingival sidewalls of the archwire and the occlusal and gingival wall sections of the archwire slot increases the difficulty in placing the archwires in the slot.

Archwires having a rectangular cross-sectional configuration are available from a number of orthodontic companies. However, rectangular archwires when used during the early stages of treatment often result in an undue amount of force for teeth that are malpositioned in the labial-lingual direction, because the larger dimension of the rectangular shape extends in the labial-lingual plane. As such, rectangular archwires are often not suitable to be used as initial archwires except in cases where little if any movement in a labial-lingual direction is needed.

To avoid patient discomfort, orthodontists have sometimes used a nominal 0.016 inch (0.41 mm) archwire having a square cross-sectional configuration in a bracket having a nominal 0.018 inch (0.46 mm) archwire slot in an attempt to achieve some degree of three-dimensional control after initial leveling of the teeth has been carried out by a round archwire. Unfortunately, a nominal 0.016 inch (0.41 mm) square archwire in a nominal 0.018 inch (0.46 mm) slot results in a relatively large amount of play and satisfactory three-dimensional control of tooth movement is often not accomplished. Typically, such archwires are replaced within a few weeks by a nominal 0.018 inch (0.46 mm) archwire to improve control over tooth movement.

A number of practitioners currently use archwires that are made of a shape memory alloy that exhibits super-elastic properties. Known shape memory alloys include nitinol alloys which are alloys made principally of nickel and titanium, but which also may include small amounts of other components such as copper or cobalt. Such archwires are described, for example, in U.S. Patent No. 4,037,324.

Archwires made of a shape memory alloy exhibiting super-elastic properties are an advantage because such archwires demonstrate a memory which causes them to return to a preset shape after being deformed and then heated. Such alloys are deformable by a martensitic shear mechanism when below a critical temperature which is the transition temperature between the martensite stage to the austenite stage. When the archwires are heated above this critical temperature, the archwire tends to return to its original pre-deformation shape. As the archwire returns to its original shape, it may impose torquing, tipping or rotational forces on the teeth in order to help move the teeth toward the desired positions.

As a result, archwires that are made of a shape memory alloy exhibiting super-elastic properties are often quite ductile when below the critical temperature and relatively easy to insert in the slots of the brackets in cases where the teeth are severely maloccluded. When such archwires have a critical temperature near the body temperature of humans, the archwires exhibit such relatively ductile characteristics when the archwires are at room temperature or cooled below room temperature. However, as the temperature of the archwire rises to the body temperature of the patient after the archwire is installed, the alloy changes from the martensite stage to the austenite stage and as a result the amount of force imposed on the teeth to move the teeth toward their orthodontically correct positions is increased.

Unfortunately, commercially available nitinol archwires are not entirely satisfactory in certain treatment programs. For example, commercially available nitinol rectangular archwire having a nominal 0.018 inch (0.46 mm) occlusal-gingival dimension may range in actual size in an occlusal-gingival direction from 0.0174 inch to 0.0180 inch (0.442 mm to 0.457 mm), but is often too stiff in instances where the teeth are severely maloccluded. A nitinol square archwire having a nominal 0.016 inch (0.41 mm) occlusal-gingival dimension results in an undue amount of play between the archwire and brackets having a slot with a nominal 0.018 inch (0.46 mm) dimension in an occlusal-gingival direction such that complete, precise three-dimensional control over movement of the teeth is not achieved. Other square archwires are also available in nitinol, such as square archwires having a nominal dimensions of 0.0175 inch by 0.0175 inch (0.445 mm by 0.445 mm), and the occlusal and gingival sidewalls of such archwires may be spaced apart a distance ranging from 0.0173 inch to 0.0176 inch (0.439 mm to 0.447 mm), but such archwires do not exhibit a transition temperature from the martensite stage to the austenite stage in the range of normal body temperatures, and thus are also not entirely satisfactory.

There exists a need in the art for an orthodontic archwire that provides precise control over tooth movement when used in conjunction with brackets having a nominal 0.018 inch (0.46 mm) archwire slot, and yet may be used in the early stages of orthodontic treatment without causing the patient to experience undue discomfort.

The present invention concerns a method of orthodontic treatment that comprises the step of securing a set of brackets to a patient's teeth wherein each bracket has a generally rectangular archwire slot with occlusal and gingival wall sections spaced apart from each other a distance in the range of 0.0182 inch to 0.0192 inch (0.462 mm to 0.488 mm). The method also includes the step of providing an archwire made of a shape memory alloy exhibiting super-elastic properties and having a transition temperature from the martensite stage to the austenite stage of at least 95°F (35°C), wherein the archwire has a generally square cross-sectional configuration with occlusal and gingival sidewalls spaced apart an average distance in the range of 0.0169 inch to 0.0172 inch (0.429 mm to 0.437 mm) from each other and labial and lingual sidewalls spaced apart an average distance in the range of 0.0169 inch to 0.0176 inch (0.429 mm to 0.447 mm) from each other. The method further includes the step of connecting the archwire to each bracket such that the archwire is non-rotatably coupled to the brackets.

Another aspect of the invention is directed toward an orthodontic archwire made of a shape memory alloy exhibiting super-elastic properties. The archwire has a transition temperature from the martensite stage to the austenite stage of at least 95°F (35°C). The archwire has a generally square cross-sectional configuration with occlusal and gingival sidewalls spaced apart an average distance in the range of 0.0169 inch to 0.0172 inch (0.429 mm to 0.437 mm) from each other. The archwire also has labial and lingual sidewalls spaced apart an average distance in the range of 0.0169 inch to 0.0176 inch (0.429 mm to 0.447 mm) from each other.

The archwires of the invention are soft and pliable at room temperature and consequently may be readily engaged into nominal 0.018 inch (0.46 mm) archwire slots of orthodontic brackets without physical interference with the archwire slots and without undue patient discomfort. However, such archwires once installed undergo a transformation from the martensite stage to the austenite stage at a temperature approximating body temperature, and as a result generate sufficient force to move the teeth over relatively long distances. The force is applied without undue trauma so that fewer changes of archwire will be needed before treatment is completed. Moreover, the archwires have a relatively large active working distance and treatment can be completed in a relatively short period of time without the need for the practitioner to replace the archwire or frequently reactivate the archwire by increasing the degree of bends, twists or the like. The archwires also provide good three-dimensional control over movement of the teeth so that the teeth can be readily guided toward their desired positions.

Further details of the invention are defined in the features of the claims.

The invention will be described in detail in connection with the drawings in which:
Fig. 1 is a top plan view of an archwire constructed in accordance with the present invention;
Fig. 2 is an enlarged transverse cross-sectional view of the archwire illustrated in Fig. 1;
Fig. 3 is an enlarged transverse cross-sectional view of the archwire illustrated in Fig. 1 along with an exemplary orthodontic bracket, showing the limit of rotation of the archwire within the slot of the bracket;
Fig. 4 is a view somewhat similar to Fig. 3 except that the distance between the occlusal and gingival sidewalls of the archwire shown in Fig. 4 is somewhat larger than the distance between the occlusal and gingival sidewalls of the archwire shown in Fig. 3;
Fig. 5 is an exemplary illustration showing an archwire of the present invention in conjunction with a set of brackets mounted on a patient's teeth, wherein the teeth have been moved to a desired final position for orthodontically correct occlusion;
Fig. 6 is a view somewhat similar to Fig. 5 except that for purposes of comparison a first bicuspid tooth of the patient is maloccluded in a gingival direction as might exist during early stages of treatment;
Fig. 7 is a view somewhat similar to Fig. 6 except that the first bicuspid tooth is maloccluded in a lingual direction;
Fig. 8 is a view somewhat similar to Fig. 6 except that the first bicuspid tooth is maloccluded in both a lingual direction as well as a gingival direction;
Fig. 9 is another exemplary illustration of an archwire of the present invention along with a bracket, wherein the archwire is bent in an occlusal direction for illustrative purposes;
Fig. 10 is a graphical representation of a force/deflection curve using a three point bend test with an archwire of the present invention;
Fig. 11 is a graphical representation similar to Fig. 10 except that a prior art archwire is used for comparative purposes; and
Fig. 12 is a graphical representation somewhat similar to Fig. 10 except that yet another prior art orthodontic archwire has been used for comparative purposes.

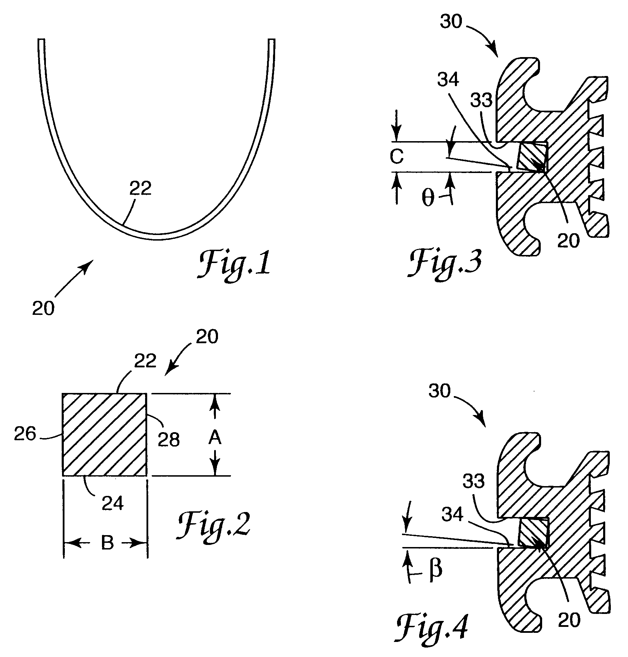

An orthodontic archwire according to the invention is illustrated in Figs. 1-9 and is broadly designated by the numeral 20. As shown in Fig. 1, the archwire 20 has a generally U-shaped configuration in plan view. The U-shaped configuration is preferably somewhat similar to the U-shaped configuration of the patient's upper or lower arch, as the case may be, when the teeth are moved to desired positions for orthodontically correct occlusion.

Referring now to Fig. 2, the archwire 20 has a generally square configuration in transverse section (i.e., in reference planes perpendicular to the central, longitudinal axis of the archwire 20). The archwire 20 includes an occlusal sidewall 22, a gingival sidewall 24, a labial sidewall 26 and a lingual sidewall 28 that are intended to face in a direction toward the apex of the patient's teeth, the patient's gingiva, the patient's cheeks or lips and the patient's tongue respectively.

The average distance between the occlusal sidewall 22 and the gingival sidewall 24 is represented by the letter "A" in Fig. 2 and is in the range of 0.0169 inch to 0.0172 inch (0.429 mm to 0.437 mm). The average distance between the labial sidewall 26 and the lingual sidewall 28 is represented by the letter "B" in Fig. 2 and is in the range of 0.0169 inch to 0.0176 inch (0.429 mm to 0.447 mm). More preferably, the dimension "B" is 0.0169 inch to 0.0172 inch (0.429 mm to 0.437 mm).

The average distances "A" and "B" as mentioned above are determined by making at least five measurements at spaced apart locations along the length of the archwire 20 in the region where the archwire 20 extends from the center of one cuspid tooth to the center of the other cuspid tooth. The measurements may be taken using a micrometer and preferably using a digital micrometer having an accuracy of 0.00005 inch (0.0013 mm). The measurements are carried out once the manufacture of the archwire 20 has been completed, and the sum of the measurements is divided by the number of measurements taken to yield an average value.

The archwire 20 is made of a shape memory alloy that exhibits super-elastic properties. Suitable alloys include nitinol alloys (which are made of nickel and titanium), and optionally have small amounts of copper, cobalt, iron, palladium, platinum, niobium (columbium), zirconium or other elements substituted for nickel. Other shape memory alloys such as those based on nickel alloyed with 36 atomic percent aluminum or their derivatives could also be used. Suitable alloys are described in U. S. Patent No. 4,037,324 and also are available from Raychem (such as Raychem alloy "BB").

The shape memory alloy exhibits a transition from the martensite stage to the austenite stage at a critical temperature of about at least 95°F (35°C), and more preferably about 98.6°F (37°C). Below this critical temperature, the alloy is quite ductile or pliable and can be readily deformed. As a consequence, when the archwire 20 is inserted in brackets that have been attached to severely maloccluded teeth, the archwire 20 can be inserted in the slot of each bracket and ligated in place without undue force or patient discomfort.

When the archwire 20 is heated above the critical temperature, such as occurs once the archwire is installed in the patient's oral cavity, the alloy displays increased mechanical memory and tends to return to its original or pre-deformation shape. The forces of the archwire are exerted on teeth associated with the brackets and urges the brackets and the associated teeth toward an orientation wherein the archwire returns to its U-shaped configuration that is shown in Fig. 1. During treatment, such forces may also be used to level, tip, rotate or upright the teeth, and may serve to close spaces between adjacent teeth. If desired, the orthodontist may also place bends or twists in the archwire at select locations where a particular type of force or a force in a certain direction is needed.

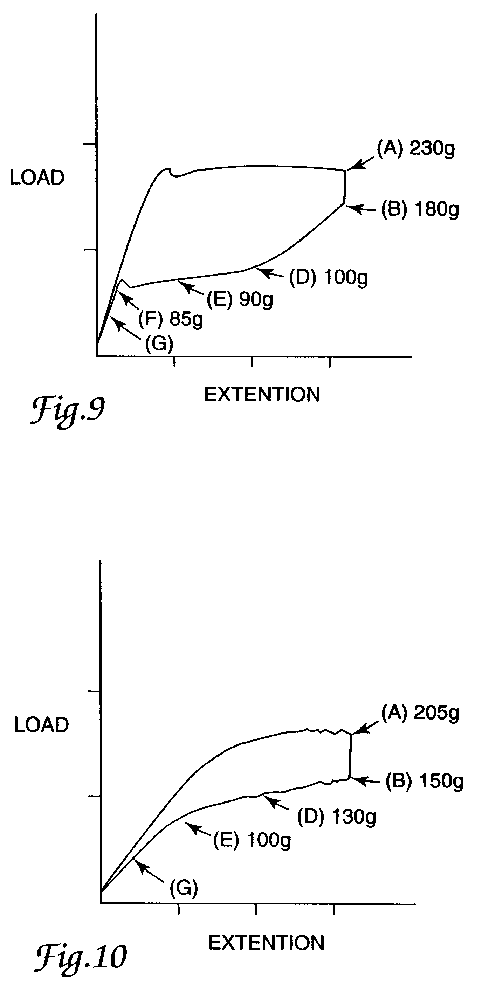

Preferably, the archwire has a stiffness in the range of about 150 grams to about 350 grams as determined by a three point bend test. The bend test is conducted using a pair of supports spaced 0.5 inch (1.3 cm) from each other, using a section of the archwire of approximately 1.0 inch (2.5 cm) in length placed over the supports, using a universal testing machine (such as an INSTRON brand machine) with a crosshead speed of 0.5 inch/min. (1.3 cm/min.), and using a deflection distance for the archwire section of 3.0 mm (as depicted, for example, by the location "A" in Fig. 10). In addition, the archwire preferably has a stiffness in the range of about 50 grams to about 150 grams, and more preferably about 80 grams, as determined by the foregoing three point bend test but during return (i.e., during relaxation of the archwire section), when measured at a distance of 0.5 mm from the starting point (as depicted, for example, by the portion between locations "E" and "F" in Fig. 10).

The archwire 20 is advantageously adapted for use with conventional orthodontic brackets having a nominal occlusal-gingival archwire slot dimension of 0.018 inch (0.46 mm). For exemplary purposes, brackets 30 are shown in Figs. 3-8 and are adapted to be fixed to certain teeth in the patient's oral cavity. Of course, a variety of other brackets having a nominal 0.018 inch (0.46 mm) occlusal-gingival slot dimension may also be used.

As depicted in Figs. 3 and 4, the bracket 30 has a generally U-shaped archwire slot with an occlusal wall section 33 that is located on the side of the archwire slot closest to the apex of the patient's tooth and a gingival wall section 34 that is located on the side of the archwire slot closest to the patient's gingiva. In Fig. 3, the dimension "C" represents the distance between the occlusal wall section 33 and the gingival wall section 34. In conventional brackets having a nominal 0.018 inch (0.46 mm) slot, the distance "C" often ranges in actuality from 0.0182 inch to 0.0192 inch (0.462 mm to 0.488 mm).

Figs. 3 and 4 represent a comparison of two archwires 20 according to the invention. In Fig. 3, the archwire 20 has actual overall dimensions of 0.0169 inch by 0.0169 inch (0.429 mm by 0.429 mm). In Fig. 4, the archwire 20 has actual dimensions of 0.0172 inch by 0.0172 inch (0.437 mm by 0.437 mm). In both Figs. 3 and 4, the distance between the occlusal wall section 33 and the gingival wall section 34 of the bracket 30 is a nominal 0.018 inch (0.46 mm) and in these examples measures 0.0192 inch (0.488 mm). In Fig. 3, the angle "θ" as indicated is 8 degrees, which represents the maximum angle that the smallest archwire 20 of the invention can turn about its longitudinal axis within the confines of the archwire slot. In Fig. 4, the angle "β" is 5 degrees and represents the maximum angle that the largest archwire 20 of the invention can turn about its longitudinal axis within the confines of the same archwire slot.

In both Figs. 3 and 4, it can be appreciated that the relative small angles θ and β allows the archwire 20 to provide good control over movement of the bracket 30 and hence of the underlying tooth whenever the archwire 20 is bent or twisted about its longitudinal axis. It can also be understood that other archwires having smaller dimensions between occlusal wall sections and gingival wall sections cannot provide the same degree of precise control as the archwires 20 of the present invention, because the angles of permissible rotation of such other archwires will be greater than the angles θ and β mentioned above.

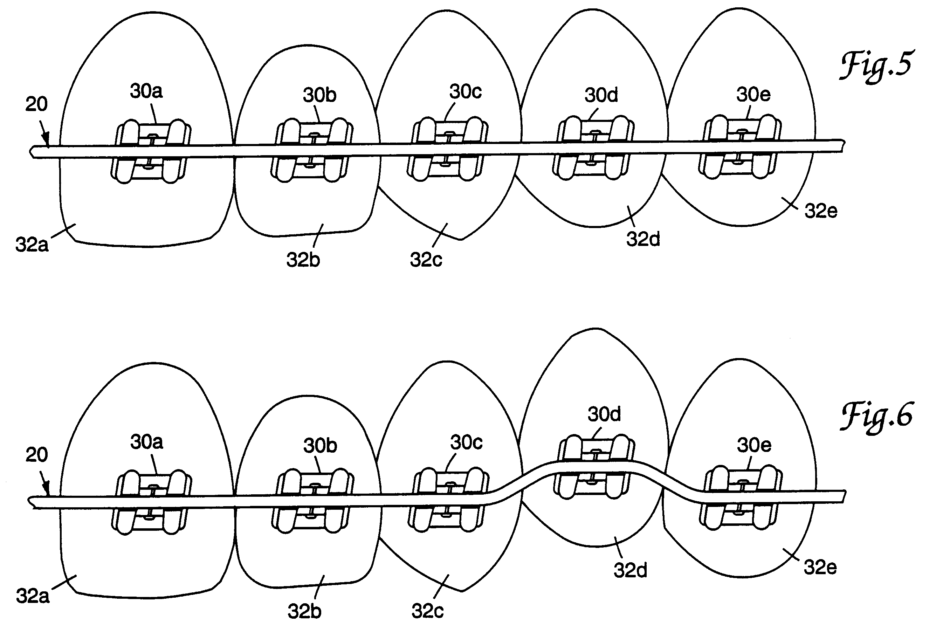

Fig. 5 is an illustration of the archwire 20 along with exemplary brackets 30a-30e, each of which is a nominal 0.018 inch (0.46 mm) bracket somewhat similar to bracket 30. Bracket 30a is fixed to an upper central tooth 32a of a patient, while bracket 30b is secured to an upper lateral tooth 32b of a patient. The bracket 30c is affixed to a cuspid tooth 32c, and brackets 30d and 30e are fixed to the patient's first bicuspid tooth 32d and second bicuspid tooth 32e respectively. Fig. 5 illustrates the desired final position of the patient's teeth as may occur near the completion of treatment.

Fig. 6 is an illustration for hypothetical purposes of the same teeth and brackets that are depicted in Fig. 5, except that the patient's first bicuspid tooth 32d is occluded upwardly in a gingival direction (i.e., toward the patient's gingiva) relative to the teeth 32a-c and e. Under such circumstances, the archwire 20 of the present invention is as satisfactory as a "0.016 inch by 0.022 inch" ("0.41 mm by 0.56 mm") rectangular archwire (which has a nominal dimension of 0.016 inch (0.41 mm) in an occlusal-gingival direction and a nominal dimension of 0.022 inch (0.56 mm) in a labial-lingual direction). In the example shown in Fig. 6, both the archwires 20 of the invention and the nominal 0.016 inch by 0.022 inch (0.41 mm by 0.56 mm) archwire are relatively pliable in an occlusal or gingival direction and provide satisfactory control for the necessary tooth movement.

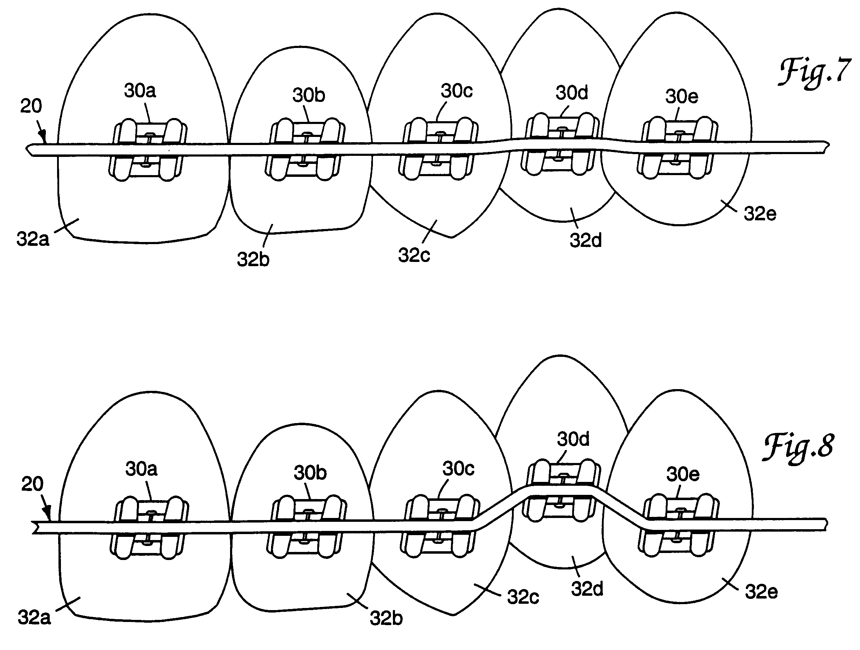

Fig. 7 is also somewhat similar to Fig. 5, except that the patient's first bicuspid tooth 32d is maloccluded inwardly in a lingual direction (i.e., toward the patient's tongue) relative to the teeth 32a-c and e. Under these circumstances, the archwires 20 of the present invention are superior to the aforementioned nominal 0.016 inch by 0.022 inch (0.41 mm by 0.56 mm) archwire, because the larger dimension (i.e., the nominal 0.022 inch (0.56 mm) dimension) extends in a labial-lingual plane and thus hinders bending of the archwire in this direction in order to engage the bracket 30d associated with the first bicuspid tooth. The nominal 0.016 inch by 0.022 inch (0.41 mm by 0.56 mm) archwire is considered too stiff by many practitioners for such labial-lingual movements.

Fig. 8 is another illustration that is somewhat similar to Fig. 5, except in this instance the patient's first bicuspid tooth 32d has been maloccluded inwardly in both a lingual direction and a gingival direction relative to the teeth 32a-c and e. Under these circumstances, the archwires 20 of the present invention are again superior to the nominal 0.016 inch by 0.022 inch (0.41 mm by 0.56 mm) archwire according to the prior art, because the archwires 20 offer less resistance to bending as may be necessary to engage the archwire slot of the bracket 30d. As in the case in Fig. 7, many practitioners consider a nominal 0.016 inch by 0.022 inch (0.41 mm by 0.56 mm) archwire to be too stiff to use in the situation represented in Fig. 8.

Fig. 9 is an illustration of the archwire 20 as received in an archwire slot of an exemplary bracket 30f. If, for example, the occlusal and gingival sidewalls of the archwire 20 are spaced apart a distance of 0.0169 inch (0.429 mm) from each other, and the bracket 30f has occlusal and gingival wall sections spaced apart a distance of 0.0182 (0.462 mm) inch from each other, the angle α is 0 degrees, 33 minutes and 6 seconds. The angle α is the angle between the longitudinal axis of the archwire slot and the longitudinal axis of that portion of the archwire that is received in the slot, when that archwire portion is touching opposite corner sections of the archwire slot on opposite sides of the bracket 30f. (The archwire slot extends from the mesial side of the mesial tiewing of the bracket 30f to the distal side of the distal tiewing of the bracket 30f.)

However, if the archwire 20 in Fig. 9 is replaced with an archwire having occlusal and gingival sidewalls spaced apart a distance of 0.0180 inch (0.46 mm) from each other, the angle α is equal to 0 degrees, 5 minutes and 6 seconds. The smaller angle α in this instance increases the difficulty of inserting the archwire in the archwire slot of the bracket 30f, because somewhat sharper bends will be required in the section of the wire between the bracket 30f and the next adjacent bracket. Relatively sharp bends may also cause permanent deformation of the archwire, such that it cannot self-return to its original shape. As a consequence, another wire may be needed to move the tooth to its desired position. The archwire 20 of the invention is an advantage, because sufficient play is provided for facilitating insertion, while the wire has a sufficient cross-sectional configuration to provide satisfactory torque control over movement of the tooth.

Figs. 10-12 represent force/deflection data of an archwire according to the invention as well as certain prior art archwires. The force/deflection data was obtained using a three point bend test wherein the archwire was cut to a section of about 1 inch in length and placed over two blocks located approximately 0.5 inch (1.3 cm) apart from each other. The archwire section was visually centered on the two blocks and the section was adjusted as needed so that the longitudinal axis of the section was perpendicular to the facing edges of the blocks. An Instron compression probe, using a crosshead speed of 0.5 inch/min. (1.3 cm/min.), was lowered to touch the archwire and then further lowered until one gram of force was applied to the archwire section by the probe. Next, the probe was further lowered until the middle of the archwire section beneath the probe was deflected downwardly a distance of 3.0 mm from the location of the middle of the section that was noted when one gram of force was applied. The force and the deflection of the archwire section were measured as the probe descended. Next, the probe was retracted upwardly and the force and deflection data were recorded as the probe ascended. The three point bend test was carried out in a chamber heated to approximately body temperature, or 98.6°F (37°C).

Fig. 10 represents a force/deflection (or load/extension) curve for a section of an archwire of the invention such as archwire 20. The archwire section had average dimensions of 0.0172 inch (0.437 mm) in an occlusal-gingival direction and 0.0173 inch (0.439 mm) in a labial-lingual direction. The various locations designated "A" to "G" on the curve represent data obtained by the method set out above, and also correspond to forces exerted by the archwire section as might occur when the archwire is used in orthodontic therapy. For example, the location "A" on the curve somewhat represents the engagement force as felt by the orthodontic practitioner when deflecting the archwire 3.0 mm as might occur to secure the archwire to a bracket that is affixed to a maloccluded tooth. However, since the test was conducted in a heated chamber, and in use the archwire would not reach the critical temperature immediately upon installation, the actual force initially felt by the patient would be somewhat lower. The engagement force at "A" is about 220 grams. Once the archwire is connected to the bracket and released, the force felt by the patient initially is about 180 grams which is represented by location "B" (which corresponds to the force exerted by the archwire section as soon as force upon the probe is released). As the tooth associated with the bracket begins to move toward its desired position, the force drops to about 100 grams at a 2 mm deflection distance (location "D"), and then to about 90 grams at a deflection distance of 1 mm from the desired position, as represented by the location "E". The force drops further to 85 grams when the deflection distance is 0.25 mm as indicated by location "F" and then to below 50 grams at a deflection distance of less than 0.15 mm away from the desired position as indicated by the location "G". During such treatment, complete 3-dimensional control of the tooth can be achieved due to the square cross-section of the archwire.

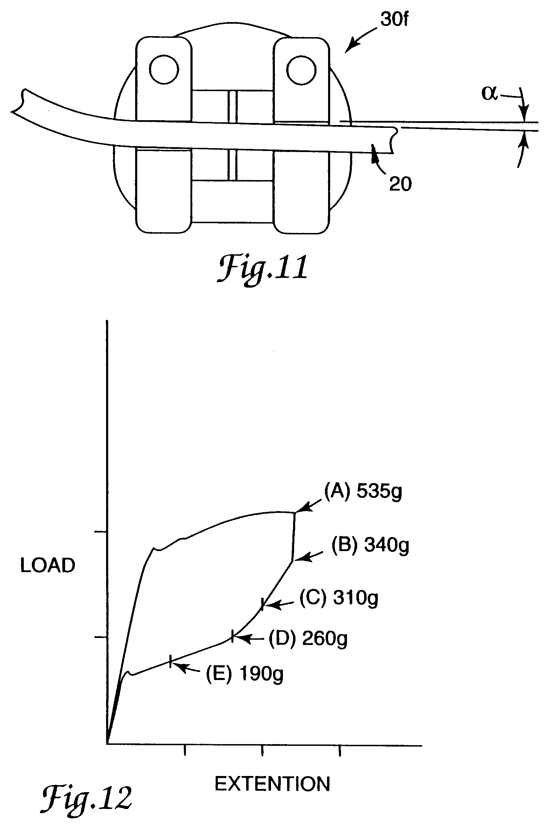

Fig. 11 represents a force/deflection curve for a section of a round archwire used according to methods known in the prior art. The round archwire had a nominal diameter of 0.016 inch (0.41 mm) (which typically ranges in actuality from a diameter of 0.0154 inch to 0.0162 inch (0.391 mm to 0.411 mm) and in this instance is nitinol SE brand archwire from 3M Unitek (catalog no. 296-807). Again, the location "A" on the curve in Fig. 11 somewhat represents the engagement force felt by the orthodontist, which in this instance was about 205 grams for a 3 mm deflection of the archwire. Once the archwire is connected to the bracket and released, the force felt initially by the patient is about 150 grams and is represented by the location "B". This force drops to about 130 grams at location "D" when the deflection of the archwire is reduced to 2 mm, and about 100 grams at location "E" when the deflection of the archwire is reduced to about 1 mm. Once the deflection drops to about 0.5 mm as shown at location "G", the force decays to below 50 grams, an amount that is generally considered insufficient for moving the tooth.

The data in Fig. 11 shows that the prior art nominal 0.016 inch (0.41 mm) round nitinol wire is unsatisfactory for moving a tooth when the deflection of the wire is 0.5 mm. By comparison, the forces exhibited by the archwires of the present invention as represented by the data shown in Fig. 10 do not drop to a level below 50 grams until the deflection distance is less than about 0.15 mm away from the desired position. Consequently, the archwires of the present invention provide forces sufficient to move maloccluded teeth to a location much closer than the desired final position than the nominal 0.016 inch (0.41 mm) round nitinol archwire, and as such can be retained in use for a longer period of time without the need for replacement by a stiffer wire. Furthermore, round archwires do not provide torque control of the brackets and associated teeth as do the square wires of the present invention.

Fig. 12 represents a force/deflection curve for a nominal 0.016 inch by 0.022 inch (0.41 mm by 0.56 mm) rectangular archwire made of a nitinol alloy when deflected in a direction along the nominal 0.022 inch (0.56 mm) dimension. The archwire in this instance was nitinol SE archwire from 3M Unitek (catalog no. 297-801) that was heat treated like a nitinol XL archwire from 3M Unitek. The location "A" on the curve in Fig. 12 represents the engagement force as felt by the orthodontist when the wire was deflected 3.0 mm, and in this instance is 535 grams. Such a relatively high force is often considered to be excessive and would provide too much trauma for the patient. The data in Fig. 12 also shows return forces of 340 grams, 310 grams, 260 grams and 190 grams at deflection distances of 3.0 mm (location "B"), 2.5 mm (location "C"), 2.0 mm (location "D") and 1 mm (location "E") respectively. However, many practitioners consider these forces to be excessive for moving teeth such distances in practice. As a consequence, this archwire is often unsatisfactory for use as an initial archwire during the early stages of orthodontic treatment, and instead is widely used only after initial leveling has been achieved by a nominal 0.016 inch (0.41 mm) round archwire such as that described in association with the data shown in Fig. 11.

The data show that the archwires of the present invention are able to move teeth over relatively long distances with gentle forces. Moreover, the archwires of the invention provide sufficient force to move teeth even when the teeth are relatively close to their desired final positions. Yet, the archwires provide good three-dimensional control over tooth movement beginning with the initial stages of treatment without excessive free play or "slop".

The archwires of the invention are manufactured by a series of cold working, annealing and heat treatment processes that are selected to provide the resultant archwires with the desired critical transformation temperature and stiffness. The cold working processes are carried out by passing a round wire (such as nitinol) through dies to draw out the wire and reduce its cross-sectional area. After each series of cold working processes (except for the final cold working process) the wire is annealed by wrapping the wire on a spool and placing the spool in an oven heated to a temperature of 1300°F (700°C) for 30 to 45 minutes. The cold working processes and the annealing process are repeated until the round wire is drawn to a diameter of about 0.0214 inch (0.544 mm) that can be converted to a wire having a square cross-sectional shape with dimensions in the range of 0.0169 inch to 0.0172 inch (0.429 mm to 0.437 mm) during the subsequent cold working process.

During the final cold working process, the wire is drawn sufficiently to impart the required stiffness in the wire. Next, the wire is subjected to a heat treatment process by first winding the wire about an oval-shaped mandrel without any overlap from one convolution to the next. The mandrel with the wire is then placed in an oven and heated. The time and temperature depend on the alloy and mandrel configuration. Typically, the wire is heated to a temperature of about 1000°F (540°C) for about 1 hour in order to cause the wire to exhibit a critical transition temperature of 98.6°F (37°C).

Next, the wire is cut from the mandrel such that each half of each convolution forms one archwire. The archwires are then subjected to a cleaning process. The cleaning process includes a tumbling operation in a drum mill using ceramic media and a chemical etching process subsequent to tumbling. A center line mark serving as an alignment guide for the orthodontist is then provided in the middle of the archwire by using a stencil and applying an acidic solution to etch the center of the archwire.

Those skilled in the art may recognize that many variations, modifications and additions can be made to the structure and methods described above without departing from the spirit of the invention. For example, other shape memory alloys that are activated in the body temperature range may be used in place of the specific alloys mentioned above. Further, the archwires may be of coaxial, braided or twisted construction instead of the unitary solid construction mentioned above. Accordingly, the invention should not be deemed limited to the specific embodiments set out above in detail, but only by a fair scope of the claims that follow along with their equivalents.

## Claims

1. An orthodontic archwire (20) made of a shape memory alloy exhibiting super-elastic properties and having a transition temperature from the martensite stage to the austenite stage of at least 35°C, wherein said archwire (20) has a generally square cross-sectional configuration with occlusal and gingival sidewalls (22, 24) spaced apart an average distance of 0.429 mm to 0.437 mm from each other, said archwire (20) also having labial and lingual sidewalls (26,28) spaced apart an average distance of 0.429 mm to 0.447 mm from each other.

2. The archwire (20) of claim 1, wherein said labial and lingual sidewalls (26, 28) are spaced apart an average distance of 0.429 mm to 0.437 mm from each other.

3. The archwire (20) of claim 1 or 2, wherein said archwire (20) has a stiffness in the range of about 150 grams to about 350 grams as determined by a three point bend test for a deflection distance of 3.0 mm using a crosshead speed of 1.3 cm/min. and supports spaced 1.3 cm from each other.

4. The archwire (20) of any of claims 1 to 3, wherein said archwire (20) has a stiffness during return in the range of about 50 grams to about 150 grams as determined by a three point bend test for a deflection distance of 0.5 mm using a crosshead speed of 1.3 cm/min. and supports spaced 1.3 cm from each other.
